# EUROPÄISCHE PATENTSCHRIFT

(11) **EP 2 883 294 B1**
(45) Veröffentlichungstag und Bekanntmachung des Hinweises auf die Patenterteilung: **10.06.2020**
(21) Anmeldenummer: 13799234.3
(22) Anmeldetag: 20.11.2013
(51) Int. Cl.: H02J 3/14, H02J 1/14, H02J 3/38

(54) **VERFAHREN ZUR RECHNERGESTÜTZTEN STEUERUNG EINES ELEKTRISCHEN ENERGIEVERTEILNETZES AUS EINER VIELZAHL VON NETZKNOTEN**
METHOD FOR THE COMPUTER-AIDED CONTROL OF AN ELECTRICAL ENERGY DISTRIBUTION NETWORK CONSISTING OF A PLURALITY OF NETWORK NODES
PROCÉDÉ DE COMMANDE ASSISTÉE PAR ORDINATEUR D'UN RÉSEAU DE DISTRIBUTION D'ÉNERGIE ÉLECTRIQUE COMPOSÉ D'UNE PLURALITÉ DE NOEUDS

(30) Priorität: 26.11.2012 DE 102012221571
(43) Veröffentlichungstag der Anmeldung: 17.06.2015
(73) Patentinhaber: Siemens Aktiengesellschaft, 80333 München (DE)
(72) Erfinder: EGER, Kolja, 30900 Wedemark/Mellendorf (DE); FRANK, Reinhard, 81369 München (DE)
(86) Internationale Anmeldenummer: PCT/EP2013/074261
(87) Internationale Veröffentlichungsnummer: WO 2014/079867

(56) Entgegenhaltungen:
- EP-A2- 2 497 678
- WO-A1-2004/008375
- WO-A2-2012/032111
- DE-A1-102007 055 517
- DE-A1-102008 045 238
- US-A1- 2008 106 425

## Beschreibung

Die Erfindung betrifft ein rechnergestütztes Verfahren zur Steuerung eines elektrischen Energieverteilnetzes aus einer Vielzahl von Netzknoten.

Heutzutage werden in elektrischen Energienetzen vermehrt dezentrale Energieerzeuger mit volatiler Leistungserzeugung verwendet, welche zur optimalen Steuerung des Energienetzes den verstärkten Einsatz von Informations- und Kommunikationstechnik bedingen.

Im Gegensatz zu Hochspannungsnetzen sind die daran angebundenen Energieverteilnetze in der Form von Mittelspannungs- und Niederspannungsnetzen in der Regel nicht kommunikationstechnisch vernetzt. Aus dem Stand der Technik sind jedoch Ansätze bekannt, wonach eine dediziert für Energieverteilnetze vorgesehene Kommunikationsinfrastruktur geschaffen wird, basierend auf der Ortsnetzstationen mit den Netzknoten in den Niederspannungsnetzen bzw. untereinander bzw. mit einem Leitsystem kommunizieren können. Dabei kann jedoch nicht gewährleistet werden, dass bestimmte Anforderungen an die Kommunikationen im Hinblick auf Latenz bzw. Dienstequalität (englisch: Quality of Service) erfüllt sind. Ferner ist der aufwändige Aufbau einer separaten Kommunikationsinfrastruktur erforderlich, was erhebliche Kosten nach sich zieht.

Die Druckschrift WO 2012/032111 A2 offenbart ein Verfahren zum Detektieren von Zuständen eines Inselbetriebs in Teilnetzen eines elektrischen Energienetzes, wobei das Energienetz Niederspannungsnetze und ein Mittelspannungsnetz umfasst. Im Verfahren dieser Druckschrift wird ein Kommunikationsnetz verwendet, über welches Rechner des Energienetzes miteinander kommunizieren können. Unter anderem sind dabei in Ortsnetzstationen entsprechende Rechner vorgesehen.

Das Dokument DE 10 2008 045 238 A1 offenbart ein Verfahren zur Inbetriebnahme eines Systems zur Ermittlung der Energieflüsse in einem elektrischen Netz. Dabei wird ein Kommunikationsnetz eingesetzt, welches verschiedene Komponenten des elektrischen Netzes miteinander verbindet.

Das Dokument WO 2004/008375 A1 zeigt ein elektrisches Energienetz aus einer Vielzahl von Netzknoten, welches ein Übertragungsnetz, Mittelspannungsnetze und Niederspannungsnetze umfasst. Die Netzknoten können über die verschiedenen Netze hinweg über Schnittstellen kommunizieren. Darüber hinaus können die Netzknoten Zugang zum Internet haben.

Aufgabe der Erfindung ist es, eine einfache und effiziente Steuerung eines Energieverteilnetzes basierend auf einer Kommunikation zwischen den Komponenten des Netzes zu schaffen. Diese Aufgabe wird durch das Verfahren gemäß Patentanspruch 1 bzw. das Steuersystem gemäß Patentanspruch 13 gelöst. Weiterbildungen der Erfindung sind in den abhängigen Ansprüchen definiert.

Das erfindungsgemäße Verfahren dient zur rechnergestützten Steuerung eines elektrischen Energieverteilnetzes aus einer Vielzahl von Netzknoten, wobei das Energieverteilnetz ein oder mehrere Niederspannungsnetze umfasst, welche jeweils erste Netzknoten zur Einspeisung von elektrischer Leistung in das jeweilige Niederspannungsnetz und/oder zur Entnahme von elektrischer Leistung aus dem jeweiligen Niederspannungsnetz enthalten. Die ersten Netzknoten stellen somit typische Netzknoten in einem Niederspannungsnetz dar, insbesondere Verbraucher bzw. dezentrale Erzeuger bzw. Kombinationen aus Erzeuger und Verbraucher bzw. Energieverwaltungssysteme, die Gebäude oder Haushalte verwalten. Das oder die Niederspannungsnetze sind in an sich bekannter Weise über einen oder mehrere zweite Netzknoten in der Form von Ortsnetzstationen an zumindest ein Mittelspannungsnetz angebunden.

Das erfindungsgemäße Verfahren zeichnet sich dadurch aus, dass zur Steuerung des Energieverteilnetzes eine oder mehrere Kontrollapplikationen mit den Netzknoten (d.h. mit zumindest einem Teil der Netzknoten) kommunizieren, wobei die Kontrollapplikation oder Kontrollapplikationen auf einem oder mehreren Rechnern in einem öffentlichen Kommunikationsnetz ausgeführt werden, zu welchem die Netzknoten Zugang haben. Der Begriff des öffentlichen Kommunikationsnetzes ist dabei derart zu verstehen, dass das Kommunikationsnetz durch einen Netzbetreiber (englisch: Network Service Provider) verwaltet wird, der sein Kommunikationsnetz mehreren Nutzern zur Verfügung stellen kann. Insbesondere ist unter einem öffentlichen Kommunikationsnetz ein Mobilfunknetz, z.B. LTE, UMTS, GPRS, GSM und dergleichen, zu verstehen. Ein öffentliches Kommunikationsnetz kann ferner ein DSL-Netz bzw. ein Kabelnetz darstellen.

Das erfindungsgemäße Verfahren weist den Vorteil auf, dass durch die Migration von Kontrollapplikationen in das Kommunikationsnetz eines Netzbetreibers auf einfache Weise Anforderungen an die Latenz bzw. Dienstequalität über den Netzbetreiber gewährleistet werden können und ferner keine separate Kommunikationsinfrastruktur für das entsprechende Energieverteilnetz aufgebaut werden muss.

In einer besonders bevorzugten Ausführungsform wird zumindest ein Teil der Kontrollapplikationen auf einer oder mehreren virtuellen Maschinen ausgeführt. Hierdurch wird eine einfache Auslagerung der Applikationen auf entsprechende Rechner des öffentlichen Kommunikationsnetzes erreicht. Insbesondere können auf bereits vorhandenen Rechnern entsprechende virtuelle Maschinen zur Ausführung der Kontrollapplikationen implementiert werden, ohne dass separat Hardware für die Kontrollapplikationen bereitgestellt werden muss.

In einer weiteren Ausführungsform des erfindungsgemäßen Verfahrens werden solche Kontrollapplikationen, welche jeweils eine vorbestimmte Menge von Netzknoten steuern, jeweils auf einem Rechner des öffentlichen Kommunikationsnetzes ausgeführt, der einen räumlichen Abstand zu der vorbestimmten Menge von Netzknoten unterhalb einer vorbestimmten Schwelle aufweist. Der räumliche Abstand kann dabei basierend auf einem geeigneten Abstandsmaß gemessen werden, z.B. kann der räumliche Abstand durch die Summe der Abstände aller Netzknoten der vorbestimmten Menge von Netzknoten zu einem Rechner des öffentlichen Kommunikationsnetzes repräsentiert werden. Der Begriff der vorbestimmten Menge von Netzknoten ist weit zu verstehen und kann gegebenenfalls auch nur einen einzelnen Netzknoten umfassen. Mit der soeben beschriebenen Ausführungsform kann die Latenz für bestimmte Kontrollapplikationen vermindert werden.

In einer weiteren Ausführungsform des erfindungsgemäßen Verfahrens wird als öffentliches Kommunikationsnetz ein Netz verwendet, welches ein Zugangsnetz mit einer Vielzahl von Zugangsstationen und ein damit verbundenes Kernnetz umfasst, wobei die Netzknoten über zumindest einen Teil der Zugangsstationen Zugang zu dem öffentlichen Kommunikationsnetz haben. Im Falle eines Mobilfunknetzes werden diese Zugangsstationen dabei durch entsprechende Basisstationen repräsentiert, und das Kernnetz ist das sog. Core-Network, welches beispielsweise für den Standard LTE als Evolved Packet Core bezeichnet wird.

In einer Variante des erfindungsgemäßen Verfahrens werden eine oder mehrere der Kontrollapplikationen auf einem oder mehreren Rechnern im Kernnetz ausgeführt. Ebenso besteht jedoch die Möglichkeit, dass eine oder mehrere der Kontrollapplikationen auf einem oder mehreren Rechnern in einer oder mehreren der Zugangsstationen ausgeführt werden. Gegebenenfalls können die Kontrollapplikationen der Zugangsstationen untereinander über eine Schnittstelle miteinander kommunizieren, z.B. über die X2-Schnittstelle eines LTE-Mobilfunknetzes. Ebenso besteht die Möglichkeit, dass eine oder mehrere der Kontrollapplikationen in einem Backbone-Netz ausgeführt werden, das an das Kernnetz angebunden ist. Je nach Anwendungsfall können die Kontrollapplikationen somit auf geeigneten Komponenten des öffentlichen Kommunikationsnetzes verteilt werden.

In einer weiteren Ausführungsform des erfindungsgemäßen Verfahrens ist einem jeweiligen Niederspannungsnetz des Energieverteilnetzes eine Anzahl von ersten Kontrollapplikationen zugeordnet, welche das jeweilige Niederspannungsnetz steuern. Auf diese Weise können an sich bekannte Kontrollanwendungen, welche heutzutage auf Ortsnetzstationen implementiert werden, in das öffentliche Kommunikationsnetz verlagert werden. Die Anzahl von ersten Kontrollapplikationen kann für zumindest ein Niederspannungsnetz gegebenenfalls eine einzige erste Kontrollapplikation umfassen, welche vorzugsweise auf einem Rechner im Kernnetz des öffentlichen Kommunikationsnetzes ausgeführt wird. Ebenso besteht die Möglichkeit, dass für zumindest ein Niederspannungsnetz die Anzahl von ersten Kontrollapplikationen mehrere erste Kontrollapplikationen umfasst, welche vorzugsweise auf Rechnern sowohl im Kernnetz als auch in einem oder mehreren Zugangsstationen ausgeführt werden. Auf diese Weise kann eine derzeit auf einer Ortsnetzstation hinterlegte Kontrollanwendung auf mehrere Kontrollapplikationen in dem öffentlichen Kommunikationsnetz verteilt werden.

In einer weiteren Ausgestaltung des erfindungsgemäßen Verfahrens werden ferner eine oder mehrere zweite Kontrollapplikationen ausgeführt, über welche mehrere zweite Netzknoten untereinander kommunizieren. Eine zweite Kontrollapplikation und eine erste Kontrollapplikation können dabei gegebenenfalls zu einer Kontrollapplikation zusammengefasst sein. Mit Hilfe der zweiten Kontrollapplikationen wird eine Kommunikation der Ortsnetzstationen untereinander ermöglicht, so dass beispielsweise eine Fehlererkennung und automatische Fehlerfreischaltung zwischen den Niederspannungsnetzen erfolgen kann.

In einer weiteren Variante der Erfindung wird zumindest eine dritte Kontrollapplikation ausgeführt, welche den Betrieb des Energieverteilnetzes zentral überwacht und vorzugsweise auf einem Rechner in dem oben beschriebenen Backbone-Netz ausgeführt wird. Die dritte Kontrollapplikation kann dabei mit entsprechenden Ortsnetzstationen bzw. ersten Knoten des Niederspannungsnetzes bzw. ersten und/oder zweiten Kontrollapplikationen (sofern vorhanden) zur Regelung bzw. Steuerung des Energieverteilnetzes kommunizieren. Die dritte Kontrollapplikation übernimmt somit im Wesentlichen die Funktionalitäten eines Leitsystems.

Neben dem oben beschriebenen Verfahren betrifft die Erfindung ferner ein Steuersystem zur rechnergestützten Steuerung eines elektrischen Energieverteilnetzes aus einer Vielzahl von Netzknoten, wobei das Energieverteilnetz ein oder mehrere Niederspannungsnetze umfasst, welche jeweils erste Netzknoten zur Einspeisung von elektrischer Leistung in das jeweilige Niederspannungsnetz und/oder zur Entnahme von elektrischer Leistung aus dem jeweiligen Niederspannungsnetz enthalten, wobei das oder die Niederspannungsnetze über einen oder mehrere zweite Netzknoten in der Form von Ortsnetzstationen an zumindest ein Mittelspannungsnetz angebunden sind.

Das Steuersystem zeichnet sich dadurch aus, dass es eine oder mehrere Kontrollapplikationen umfasst, welche bei deren Ausführung zur Steuerung des Energieverteilnetzes mit den Netzknoten kommunizieren, wobei die Kontrollapplikation oder Kontrollapplikationen für deren Ausführung auf einem oder mehreren Rechnern in einem öffentlichen Kommunikationsnetz hinterlegt sind, zu welchem die Netzknoten Zugang haben. Das Steuersystem ist vorzugsweise auch zur Durchführung einer oder mehrerer bevorzugter Varianten des erfindungsgemäßen Verfahrens eingerichtet.

Ausführungsbeispiele der Erfindung werden nachfolgend anhand der beigefügten Figuren detailliert beschrieben.

Es zeigen:

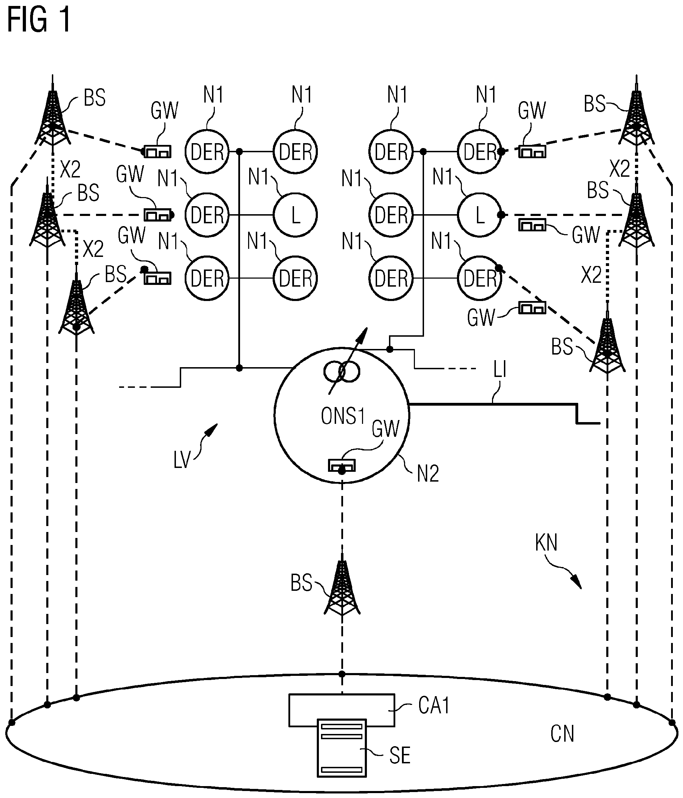

- Fig. 1 bis Fig. 4: schematische Darstellungen eines Energieverteilnetzes und einer Kommunikationsinfrastruktur, in denen verschiedene Ausführungsformen des erfindungsgemäßen Verfahrens durchgeführt werden.

Die nachfolgenden Ausführungsformen des erfindungsgemäßen Verfahrens werden basierend auf einer Anbindung eines Energieverteilnetzes an ein Mobilfunknetz beschrieben. Die Erfindung ist jedoch nicht auf Mobilfunknetze beschränkt und kann auch in anderen öffentlichen Kommunikationsnetzen realisiert werden. Gemäß Fig. 1 umfasst ein Energieverteilnetz mehrere Niederspannungsnetze LV, von denen in Fig. 1 nur eines wiedergegeben ist. Das Niederspannungsnetz LV beinhaltet eine Vielzahl von über Stromleitungen miteinander vernetzten ersten Knoten N1, wobei in Fig. 1 und auch in den nachfolgenden Figuren Verbindungen über Stromleitungen mit durchgezogenen Linien angedeutet sind. Beispielhaft sind in Fig. 1 als erste Knoten dezentrale Erzeuger DER sowie Lasten L (d.h. reine Verbraucher) wiedergegeben. Die dezentralen Erzeuger DER können dabei gegebenenfalls auch Energie aus dem Niederspannungsnetz entnehmen. In dem Niederspannungsnetz können ferner auch noch andere Arten von Knoten zur Entnahme bzw. Einspeisung von elektrischer Leistung vorgesehen sein, wie z.B. Energiemanagementsysteme in sog. Smart-Buildings bzw. Smart-Homes.

Die einzelnen ersten Knoten N1 sind mit einem zweiten Knoten N2 in der Form einer Ortsnetzstation ONS1 verbunden, welche Transformatoren enthält und die Spannung von dem Niederspannungsnetz in ein Mittelspannungsnetz transformiert. Die Ortsnetzstation ONS1 ist somit in Bezug auf das Niederspannungsnetz LV für die Einspeisung bzw. Entnahme von elektrischer Leistung in das bzw. aus dem Mittelspannungsnetz zuständig. Die Verbindung der Ortsnetzstation zum Mittelspannungsnetz ist dabei durch die dicke durchgezogene Linie LI angedeutet, wobei das Mittelspannungsnetz selbst nicht wiedergegeben ist. An dem Mittelspannungsnetz hängt in der Regel eine Vielzahl von Niederspannungsnetzen. Typische Spannungen in Niederspannungsnetzen liegen bei 0,4 kV und in Mittelspannungsnetzen bei 30 kV.

Gemäß der Ausführungsform der Fig. 1 sind die ersten Netzknoten N1 sowie der zweite Netzknoten N2 an ein Mobilfunknetz KN, wie z.B. ein LTE-Mobilfunknetz, über entsprechende Basisstationen BS angebunden. Hierzu ist im Niederspannungsnetz LV eine Vielzahl von Gateways GW vorgesehen, welche über eine entsprechende SIM/USIM-Karte verfügen und über eine Luftschnittstelle mit einer Basisstation der Mobilfunkzelle kommunizieren, in der sich das entsprechende Gateway befindet. Durch die Basisstationen BS wird das Zugangsnetz des Mobilfunknetzes gebildet, welches im Kontext von LTE auch als eU-TRAN bezeichnet wird. Über entsprechende Schnittstellen ist dieses Zugangsnetz mit dem Kernnetz CN des Mobilfunknetzes verbunden, welches im Kontext von LTE auch als Evolved Packet Core bezeichnet wird. Die Verbindungen zwischen den Basisstationen und dem Kernnetz sind in Fig. 1 und auch in den weiteren Figuren durch gestrichelte Linien angedeutet. Die Basisstationen BS, welche im Kontext von LTE auch als eNodeB bezeichnet werden, sind ferner untereinander basierend auf einer gepunktet angedeuteten Schnittstelle vernetzt, welche die sog. X2-Schnittstelle darstellt, über welche Basisstationen direkt miteinander kommunizieren können.

Die Grundidee des erfindungsgemäßen Verfahrens besteht darin, dass die einzelnen Netzknoten N1 und N2 im Energieverteilnetz über eine oder mehrere Kontrollapplikationen gesteuert werden, welche nicht mehr im Energieverteilnetz selbst implementiert sind, sondern in der Infrastruktur des öffentlichen Kommunikationsnetzes und damit des Network-Service-Providers dieses Netzes. Auf diese Weise kann für die Kommunikation zwischen den Netzknoten eine Verbesserung der Latenz bzw. Servicequalität erreicht werden.

Zur Umsetzung des erfindungsgemäßen Verfahrens für die nachfolgend beschriebenen Ausführungsformen werden einzelne Kontrollapplikationen, welche herkömmlicherweise direkt in Netzknoten des Energieverteilnetzes ausgeführt werden, virtualisiert, d.h. die Kontrollapplikationen werden in sog. virtuellen Maschinen (englisch: Virtual Machine) bereitgestellt, welche in einfacher Weise in bereits vorhandene oder entsprechend erweiterte Rechner bzw. Server des Mobilfunknetzes implementiert werden können. Die Kontrollapplikationen können z.B. über einen an sich bekannten Cloud-Service des Mobilfunknetzbetreibers in die Infrastruktur des Mobilfunknetzes verschoben und dort betrieben werden.

Um die zuverlässige Ausführung der Kontrollapplikationen im Mobilfunknetz zu gewährleisten, muss der Mobilfunknetzbetreiber gegebenenfalls sein Netz um Rechentechnik (z.B. Server) erweitern, auf denen dann die verschiedenen Kontrollapplikationen in virtuellen Maschinen laufen können. Der Mobilfunknetzbetreiber kann dabei seine Rechenleistung z.B. als "Infrastructure as a Service" gegenüber dem Betreiber des Energieverteilnetzes vermarkten. In einer bevorzugten Ausführungsform spezifiziert der Mobilfunknetzbetreiber entsprechende APIs (API = Application Programming Interface) zur Implementierung von Kontrollapplikationen auf seiner Rechentechnik.

Wie im Folgenden noch näher beschrieben wird, können die entsprechenden Kontrollapplikationen je nach deren Aufgaben an verschiedenen Orten im Mobilfunknetz implementiert werden. Führt eine Applikation beispielsweise nur Steueraufgaben für Netzknoten in einer bestimmten lokalen Umgebung aus, ist es vorteilhaft, wenn die Kontrollapplikation nahe an diesen Netzknoten implementiert ist, z.B. in einem entsprechenden Rechner der Basisstation, in deren Funkzelle die zu steuernden Netzknoten liegen. Darüber hinaus besteht gegebenenfalls die Möglichkeit, dass die Kontrollapplikationen auf verschiedenen Basisstationen direkt miteinander kommunizieren, wobei hierfür in LTE die X2-Schnittstelle genutzt werden kann.

In dem Szenario der Fig. 1 wird eine einzelne Kontrollapplikation CA1, welche herkömmlicherweise in der Ortsnetzstation ONS1 hinterlegt ist, in einen entsprechenden Server SE in dem Kernnetz CN implementiert. Die Kontrollapplikation CA1 kommuniziert dabei sowohl mit der Ortsnetzstation ON1 als auch mit den Knoten N1. Insbesondere erfasst sie entsprechende Messwerte (z.B. Spannungen) der einzelnen Netzknoten und kann dabei die Spannung in dem Niederspannungsnetz LV durch Anpassung der Blindleistung in den Knoten N1 bzw. durch entsprechende Parametrisierung der Transformatoren in der Ortsnetzstation ONS1 regeln. Hierzu werden entsprechende Kontrollkommandos von der Applikation CA1 an die Aktoren in den ersten Knoten N1 bzw. in der Ortsnetzstation ONS1 gesendet.

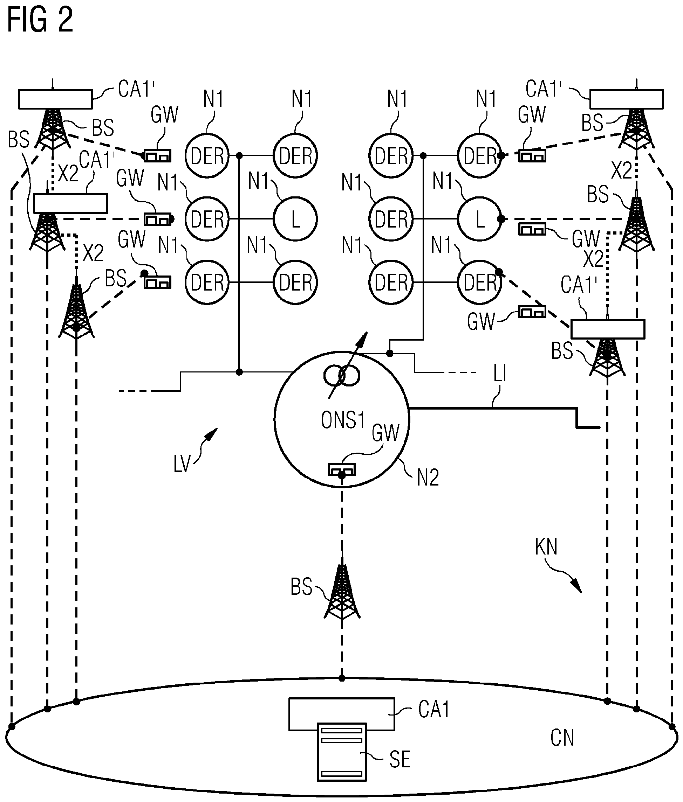

Fig. 2 zeigt ein ähnliches Szenario wie Fig. 1, wobei in dieser Figur und auch in den weiteren Figuren zur Bezeichnung von gleichen bzw. einander entsprechenden Komponenten die gleichen Bezugszeichen wie in Fig. 1 verwendet werden. Gemäß Fig. 2 wurde eine ursprünglich in der Ortsnetzstation ONS1 ausgeführte Kontrollanwendung in mehrere Kontrollapplikationen CA1 und CA1' aufgeteilt. Die Kontrollapplikation CA1 läuft in Analogie zu Fig. 1 auf einem Server SE im Kernnetz CN des Mobilfunknetzes. Demgegenüber sind die Kontrollapplikationen CA1' lokal auf einem Teil der Basisstationen BS hinterlegt.

Die Aufteilung der Kontrollapplikationen auf die verschiedenen Komponenten im Mobilfunknetz (d.h. auf Basisstationen oder auf das Kernnetz) erfolgt vorzugsweise in Abhängigkeit von entsprechenden QoS-Anforderungen der Applikationen. Wie bereits oben erwähnt, werden dabei Applikationen, welche lediglich lokal auf erste Netzknoten in räumlicher Nachbarschaft zugreifen, auf der entsprechenden Basisstation in räumlicher Nähe zu den ersten Netzknoten implementiert. Auf diese Weise kann eine Latenzminimierung des entsprechenden Dienstes der Kontrollapplikation erreicht werden. Wie ebenfalls oben erwähnt, können gegebenenfalls auch zwischen den einzelnen Kontrollapplikationen der Basisstationen Informationen ausgetauscht werden bzw. Kontrollkommandos übermittelt werden, wobei hierfür die dargestellte X2-Schnittstelle genutzt wird. Eine Aufteilung einer an sich bekannten Kontrollanwendung für eine Ortsnetzstation auf verschiedene Kontrollapplikationen in dem Kommunikationsnetz entsprechend den Steueraufgaben bzw. QoS-Anforderungen ist dabei für einen Fachmann problemlos realisierbar und wird deshalb nicht weiter im Detail beschrieben.

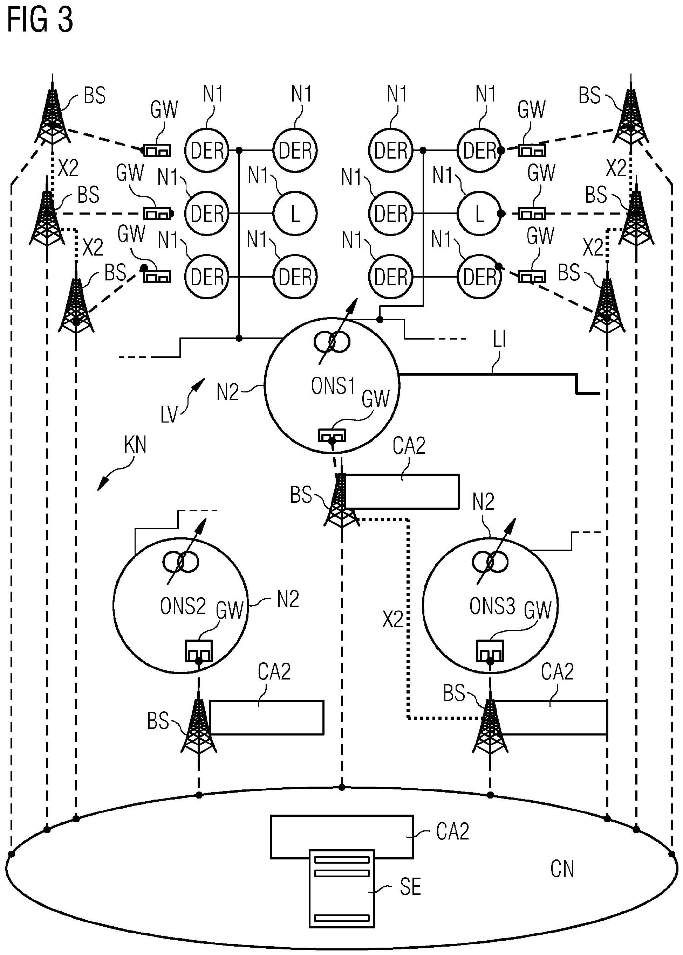

Fig. 3 zeigt ein weiteres Szenario des erfindungsgemäßen Verfahrens, wobei nunmehr als zweite Netzknoten N2 die Ortsnetzstationen ONS1, ONS2 und ONS3 von mehreren Niederspannungsnetzen wiedergegeben sind. Dabei ist lediglich eines der Niederspannungsnetze LV angedeutet. Gemäß Fig. 3 ist in einer entsprechenden Basisstation BS benachbart zu der jeweiligen Ortsnetzstation eine jeweilige zweite Kontrollapplikation CA2 hinterlegt, wobei ferner eine weitere zweite Kontrollapplikation CA2 in einem entsprechenden Server SE im Kernnetz CN vorhanden ist. Die Ortsnetzstationen sind dabei über ein jeweiliges Gateway an die Basisstationen angebunden. Die jeweiligen zweiten Kontrollapplikationen können gegebenenfalls mit einer oder mehreren ersten Kontrollapplikation aus Fig. 1 bzw. Fig. 2 zu einer einzelnen Kontrollapplikation zusammengefasst sein. Die zweiten Kontrollapplikationen ermöglichen eine Kommunikation der einzelnen Ortsnetzstationen ONS1 bis ONS3 untereinander, um entsprechende Informationen in Bezug auf die Spannungs- bzw. Stromversorgung der verschiedenen Niederspannungsnetze auszutauschen. Über die Wechselwirkung der Applikationen können dabei eine Fehlererkennung und eine automatische Fehlerfreischaltung erfolgen. Über die Kommunikation der Ortsnetzstationen kann somit erreicht werden, dass nur der gestörte Leitungsabschnitt freigeschaltet wird und gleichzeitig die Sicherheit im Netz gewährleistet wird.

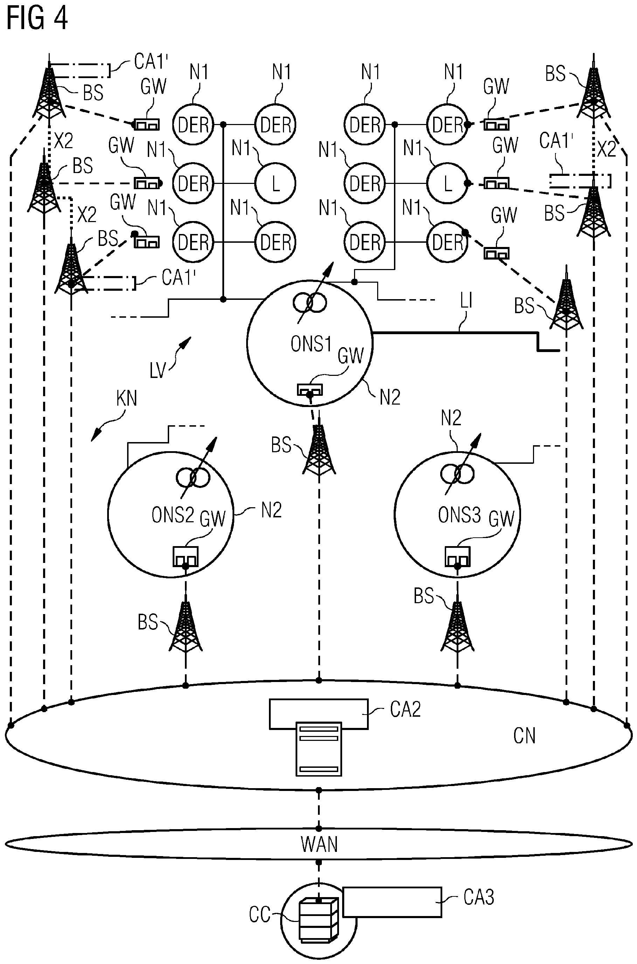

Fig. 4 zeigt ein Szenario ähnlich zu Fig. 3, bei dem das Energieverteilnetz aus Niederspannungsnetzen, Ortsnetzstationen und einem Mittelspannungsnetz durch ein zentrales Leitsystem CC überwacht wird, wobei die Überwachung durch eine dritte Kontrollapplikation CA3 realisiert ist, welche in einem Backbone-Netz hinterlegt ist, das über ein Wide-Area-Network WAN an das Kernnetz CN des Mobilfunknetzes angebunden ist. Das Backbone-Netz stellt in diesem Sinne auch einen Teil eines öffentlichen Kommunikationsnetzes dar. Die Kontrollapplikation CA3 dient dazu, dass alle Netzknoten N1 und N2 miteinander koordiniert werden, so dass das gesamte Energieverteilnetz geregelt wird. Hierzu kann die Kontrollapplikation CA3 Zustandsinformationen der einzelnen ersten Netzknoten N1 bzw. von entsprechenden Messeinrichtungen in den Ortsnetzstationen empfangen und basierend darauf Kontrollkommandos ermitteln, die an Aktoren in den Ortsnetzstationen bzw. den einzelnen ersten Netzknoten gegeben werden.

Darüber hinaus können auch weiterhin lokale Kontrollaufgaben durch Applikationen im Kernnetz CN bzw. in den entsprechenden Basisstationen BS übernommen werden, wobei beispielhaft eine Applikation CA2 im Kernnetz sowie mehrere Applikationen CA1' in den einzelnen Basisstationen wiedergegeben sind. Diese Kontrollapplikationen können z.B. Informationen von mehreren Netzknoten bzw. Basisstationen aggregieren und an die Kontrollapplikation CA3 weitergeben, welche daraufhin die Steuerung der einzelnen Netzknoten übernimmt.

Die im Vorangegangenen beschriebenen Ausführungsformen des erfindungsgemäßen Verfahrens weisen eine Reihe von Vorteilen auf. Insbesondere können auf einfache Weise durch Virtualisierung Kontrollapplikationen in ein öffentliches Kommunikationsnetz eines Network-Service-Providers verlagert werden. Durch die Benutzung eines öffentlichen Kommunikationsnetzes wird Kosteneffizienz erreicht. Weiterhin können durch die Verlagerung der Kontrollapplikationen in ein öffentliches Netz einfach bestimmte Qualitätsanforderungen durch den Netzbetreiber gewährleistet werden bzw. Garantien zur Latenz gegeben werden, da ein Endpunkt der Regelung bzw. Steuerung innerhalb seines Kommunikationsnetzes liegt. Die Kontrollapplikationen können ferner je nach Anwendungsfall auf geeignete Komponenten verteilt werden, welche eine schnelle Kommunikation mit geringer Latenz gewährleisten. Zum Beispiel können Kontrollapplikationen möglichst nahe an einer zu kontrollierenden Einheit (Sensor/Aktor) des Energienetzes verlagert werden. Ferner kann gegebenenfalls eine optimierte Verteilung der einzelnen Kontrollapplikationen in dem Kommunikationsnetz des Netzbetreibers erreicht werden.

Das erfindungsgemäße Verfahren ist für beliebige öffentliche Kommunikationsnetze anwendbar, insbesondere für Mobilfunknetze (LTE, UMTS, GPRS, GSM und dergleichen), sowie auch für andere Netze, wie Kabelnetze über Glasfaser bzw. Koaxialkabel. Bei der Verwendung eines LTE-Mobilfunknetzes kann ferner die an sich bekannte X2-Schnittstelle zur Überwachung bzw. Steuerung von Kontrollapplikationen in verschiedenen Basisstationen genutzt werden. Darüber hinaus können gegebenenfalls LTE-Mechanismen zur Qualitätssicherung (z.B. Priorisierung von Verkehrsströmen auf der eNodeB-Schnittstelle) wiederverwendet werden.

## Patentansprüche

1. Verfahren zur rechnergestützten Steuerung eines elektrischen Energieverteilnetzes aus einer Vielzahl von Netzknoten (N1, N2), wobei das Energieverteilnetz ein oder mehrere Niederspannungsnetze (LV) umfasst, welche jeweils erste Netzknoten (N1) zur Einspeisung von elektrischer Leistung in das jeweilige Niederspannungsnetz (LV) und/oder zur Entnahme von elektrischer Leistung aus dem jeweiligen Niederspannungsnetz (LV) enthalten, wobei das oder die Niederspannungsnetze (LV) über einen oder mehrere zweite Netzknoten (N2) in der Form von Ortsnetzstationen (ONS1, ONS2, ONS3) an zumindest ein Mittelspannungsnetz angebunden sind, **dadurch gekennzeichnet, dass** zur Steuerung des Energieverteilnetzes eine oder mehrere Kontrollapplikationen (CA1, CA1', CA2, CA3) mit den Netzknoten (N1, N2) kommunizieren, wobei
- die Kontrollapplikation oder Kontrollapplikationen (CA1, CA1', CA2, CA3) auf einem oder mehreren Rechnern in einem öffentlichen Kommunikationsnetz (KN) ausgeführt werden, zu welchem die Netzknoten (N1, N2) Zugang haben, wobei das öffentliche Kommunikationsnetz (KN) ein Mobilfunknetz und/oder ein DSL-Netz und/oder ein Kabelnetz umfasst,
- zumindest ein Teil der Kontrollapplikationen (CA1, CA1', CA2, CA3) auf einer oder mehreren virtuellen Maschinen ausgeführt wird und
- die Kontrollapplikation oder Kontrollapplikationen (CA1, CA1', CA2, CA3) nicht im Energieverteilnetz selbst implementiert sind, sondern in der Infrastruktur des öffentlichen Kommunikationsnetzes (KN) und damit des Network-Service-Providers dieses Netzes.

2. Verfahren nach Anspruch 1, **dadurch gekennzeichnet, dass** solche Kontrollapplikationen (CA1, CA1', CA2, CA3), welche jeweils eine vorbestimmte Menge von Netzknoten (N1, N2) steuern, jeweils auf einem Rechner des öffentlichen Kommunikationsnetzes (KN) ausgeführt werden, der einen räumlichen Abstand zu der vorbestimmte Menge von Netzknoten (N1, N2) unterhalb einer vorbestimmte Schwelle aufweist.

3. Verfahren nach einem der vorhergehenden Ansprüche, **dadurch gekennzeichnet, dass** das öffentliche Kommunikationsnetz (KN) ein Zugangsnetz mit einer Vielzahl von Zugangsstationen (BS) und ein damit verbundenes Kernnetz (CN) umfasst, wobei die Netzknoten (N1, N2) über zumindest einen Teil der Zugangsstationen (BS) Zugang zu dem öffentlichen Kommunikationsnetz (KN) haben.

4. Verfahren nach Anspruch 3, **dadurch gekennzeichnet, dass** auf einem oder mehreren Rechnern (SE) im Kernnetz (CN) eine oder mehrere der Kontrollapplikationen (CA1, CA1', CA2, CA3) ausgeführt werden.

5. Verfahren nach Anspruch 3 oder 4, **dadurch gekennzeichnet, dass** auf einem oder mehreren Rechnern in einer oder mehreren der Zugangsstationen (BS) eine oder mehrere der Kontrollapplikationen (CA1, CA1', CA2, CA3) ausgeführt werden.

6. Verfahren nach Anspruch 5, **dadurch gekennzeichnet, dass** die auf den Rechnern der Zugangsstationen (BS) ausgeführten Kontrollapplikationen (CA1, CA1', CA2, CA3) untereinander über eine Schnittstelle, insbesondere die X2-Schnittstlle eines LTE-Mobilfunknetzes, miteinander kommunizieren.

7. Verfahren nach einem der Ansprüche 3 bis 6, **dadurch gekennzeichnet, dass** eine oder mehrere der Kontrollapplikationen (CA1, CA1', CA2, CA3) in einem Backbone-Netz ausgeführt werden, das an das Kernnetz (CN) angebunden ist.

8. Verfahren nach einem der vorhergehenden Ansprüche, **dadurch gekennzeichnet, dass** einem jeweiligen Niederspannungsnetz (LV) eine Anzahl von ersten Kontrollapplikationen zugeordnet (CA1, CA1') ist, welche das jeweilige Niederspannungsnetz (LV) steuern.

9. Verfahren nach Anspruch 8, **dadurch gekennzeichnet, dass** für zumindest ein Niederspannungsnetz (LV) die Anzahl von ersten Kontrollapplikationen (CA1, CA1') eine einzige erste Kontrollapplikation umfasst, welche vorzugsweise auf einem Rechner im Kernnetz (CN) des öffentlichen Kommunikationsnetzes (KN) ausgeführt wird.

10. Verfahren nach Anspruch 8 oder 9, **dadurch gekennzeichnet, dass** für zumindest ein Niederspannungsnetz (LV) die Anzahl von ersten Kontrollapplikationen (CA1, CA1') mehrere erste Kontrollapplikationen (CA1, CA1') umfasst, welche vorzugsweise auf Rechnern sowohl im Kernnetz (CN) als auch in einem oder mehreren Zugangsstationen (BS) ausgeführt werden.

11. Verfahren nach einem der vorhergehenden Ansprüche, **dadurch gekennzeichnet, dass** eine oder mehrere zweite Kontrollapplikationen (CA2) ausgeführt werden, über welche mehrere zweite Netzknoten (N2) untereinander kommunizieren.

12. Verfahren nach einem der vorhergehenden Ansprüche, **dadurch gekennzeichnet, dass** zumindest eine dritte Kontrollapplikationen (CA3) ausgeführt wird, welche den Betrieb des Energieverteilnetzes zentral überwacht und vorzugsweise auf einem Rechner in dem Backbone-Netz ausgeführt wird.

13. Steuersystem zur rechnergestützten Steuerung eines elektrischen Energieverteilnetzes aus einer Vielzahl von Netzknoten (N1, N2), wobei das Energieverteilnetz ein oder mehrere Niederspannungsnetze (LV) umfasst, welche jeweils erste Netzknoten (N1) zur Einspeisung von elektrischer Leistung in das jeweilige Niederspannungsnetz (LV) und/oder zur Entnahme von elektrischer Leistung aus dem jeweiligen Niederspannungsnetz (LV) enthalten, wobei das oder die Niederspannungsnetze (LV) über einen oder mehrere zweite Netzknoten (N2) in der Form von Ortsnetzstationen (ONS1, ONS2, ONS3) an zumindest ein Mittelspannungsnetz angebunden sind,
**dadurch gekennzeichnet, dass**
das Steuersystem eine oder mehrere Kontrollapplikationen (CA1, CA1', CA2, CA3) umfasst, welche bei deren Ausführung zur Steuerung des Energieverteilnetzes mit den Netzknoten (N1, N2) kommunizieren, wobei
- die Kontrollapplikation oder Kontrollapplikationen (CA1, CA1', CA2, CA3) für deren Ausführung auf einem oder mehreren Rechnern in einem öffentlichen Kommunikationsnetz (KN) hinterlegt sind, zu welchem die Netzknoten (N1, N2) Zugang haben, wobei das öffentliche Kommunikationsnetz (KN) ein Mobilfunknetz und/oder ein DSL-Netz und/oder ein Kabelnetz umfasst
- zumindest ein Teil der Kontrollapplikationen (CA1, CA1', CA2, CA3) auf einer oder mehreren virtuellen Maschinen ausgeführt wird und
- die Kontrollapplikation oder Kontrollapplikationen (CA1, CA1', CA2, CA3) nicht im Energieverteilnetz selbst implementiert sind, sondern in der Infrastruktur des öffentlichen Kommunikationsnetzes (KN) und damit des Network-Service-Providers dieses Netzes.

14. Steuersystem nach Anspruch 13, welches zur Durchführung eines Verfahrens nach einem der Ansprüche 1 bis 12 eingerichtet ist.

## Claims

1. Method for the computer-assisted control of an electrical energy distribution network consisting of a multiplicity of network nodes (N1, N2), wherein the energy distribution network comprises one or more low-voltage networks (LV) that each contain first network nodes (N1) for feeding electric power into the respective low-voltage network (LV) and/or for drawing electric power from the respective low-voltage network (LV), wherein the low-voltage network or networks (LV) are connected to at least one medium-voltage network via one or more second network nodes (N2) in the form of local substations (ONS1, ONS2, ONS3), **characterized in that** one or more control applications (CA1, CA1', CA2, CA3) communicate with the network nodes (N1, N2) in order to control the energy distribution network, wherein
- the control application or control applications (CA1, CA1', CA2, CA3) are executed on one or more computers in a public communication network (KN) to which the network nodes (N1, N2) have access, wherein the public communication network (KN) comprises a mobile radio network and/or a DSL network and/or a cable network,
- at least some of the control applications (CA1, CA1', CA2, CA3) are executed on one or more virtual machines, and
- the control application or control applications (CA1, CA1', CA2, CA3) are not implemented in the energy distribution network itself, but rather in the infrastructure of the public communication network (KN) and thus of the network service provider of this network.

2. Method according to Claim 1, **characterized in that** such control applications (CA1, CA1', CA2, CA3) that each control a predetermined set of network nodes (N1, N2) are each executed on a computer of the public communication network (KN), which computer is at a spatial distance from the predetermined set of network nodes (N1, N2) that is below a predetermined threshold.

3. Method according to either of the preceding claims, **characterized in that** the public communication network (KN) comprises an access network having a multiplicity of access stations (BS) and a core network (CN) connected thereto, wherein the network nodes (N1, N2) have access to the public communication network (KN) via at least some of the access stations (BS).

4. Method according to Claim 3, **characterized in that** one or more of the control applications (CA1, CA1', CA2, CA3) are executed on one or more computers (SE) in the core network (CN) .

5. Method according to Claim 3 or 4, **characterized in that** one or more of the control applications (CA1, CA1', CA2, CA3) are executed on one or more computers in one or more of the access stations (BS).

6. Method according to Claim 5, **characterized in that** the control applications (CA1, CA1', CA2, CA3) executed on the computers of the access stations (BS) communicate with one another via an interface, in particular the X2 interface of an LTE mobile radio network.

7. Method according to one of Claims 3 to 6, **characterized in that** one or more of the control applications (CA1, CA1', CA2, CA3) is executed in a backbone network that is connected to the core network (CN).

8. Method according to one of the preceding claims, **characterized in that** a number of first control applications (CA1, CA1') that control a respective low-voltage network (LV) are assigned to the respective low-voltage network (LV).

9. Method according to Claim 8, **characterized in that** the number of first control applications (CA1, CA1') comprises a single first control application for at least one low-voltage network (LV), which single first control application is preferably executed on a computer in the network core (CN) of the public communication network (KN).

10. Method according to Claim 8 or 9, **characterized in that** the number of first control applications (CA1, CA1') comprises a plurality of first control applications (CA1, CA1') for at least one low-voltage network (LV), which plurality of first control applications are preferably executed on computers both in the core network (CN) and in one or more access stations (BS) .

11. Method according to one of the preceding claims, **characterized in that** one or more second control applications (CA2) are executed, via which one or more second control applications a plurality of second network nodes (N2) communicate with one another.

12. Method according to one of the preceding claims, **characterized in that** at least one third control application (CA3) is executed, which third control application centrally monitors the energy distribution network and is preferably executed on a computer in the backbone network.

13. Control system for the computer-assisted control of an electrical energy distribution network consisting of a multiplicity of network nodes (N1, N2), wherein the energy distribution network comprises one or more low-voltage networks (LV) that each contain first network nodes (N1) for feeding electric power into the respective low-voltage network (LV) and/or for drawing electric power from the respective low-voltage network (LV), wherein the low-voltage network or networks (LV) are connected to at least one medium-voltage network via one or more second network nodes (N2) in the form of local substations (ONS1, ONS2, ONS3),
**characterized in that**
the control system comprises one or more control applications (CA1, CA1', CA2, CA3) that, when they are executed, communicate with the network nodes (N1, N2) in order to control the energy distribution network, wherein
- the control application or control applications (CA1, CA1', CA2, CA3), in order to be executed, are stored on one or more computers in a public communication network (KN) to which the network nodes (N1, N2) have access, wherein the public communication network (KN) comprises a mobile radio network and/or a DSL network and/or a cable network,
- at least some of the control applications (CA1, CA1', CA2, CA3) are executed on one or more virtual machines, and
- the control application or control applications (CA1, CA1', CA2, CA3) are not implemented in the energy distribution network itself, but rather in the infrastructure of the public communication network (KN) and thus of the network service provider of this network.

14. Control system according to Claim 13, configured so as to perform a method according to one of Claims 1 to 12.

## Revendications

1. Procédé de commande assistée par ordinateur d'un réseau de distribution d'énergie électrique composé d'une pluralité de nœuds de réseau (N1, N2), le réseau de distribution d'énergie comprenant un ou plusieurs réseaux basse tension (LV) qui contiennent respectivement des premiers nœuds de réseau (N1) pour injecter une puissance électrique dans le réseau basse tension respectif (LV) et/ou pour prélever une puissance électrique sur le réseau basse tension respectif (LV), le ou les réseaux basse tension (LV) étant reliés à au moins un réseau moyenne tension via un ou plusieurs deuxièmes nœuds de réseau (N2) sous la forme de stations de réseau local (ONS1, ONS2, ONS3), **caractérisé en ce que**, pour commander le réseau de distribution d'énergie, une ou plusieurs applications de contrôle (CA1, CA1', CA2, CA3) communiquent avec les nœuds de réseau (N1, N2),
- l'application de contrôle ou les applications de contrôle (CA1, CA1', CA2, CA3) étant exécutées sur un ou plusieurs ordinateurs dans un réseau de communication public (KN) auxquels les nœuds de réseau (N1, N2) ont accès, le réseau de communication public (KN) comprenant un réseau radio mobile et/ou un réseau DSL et/ou un réseau de câbles,
- au moins une partie des applications de contrôle (CA1, CA1', CA2, CA3) étant exécutée sur une ou plusieurs machines virtuelles et
- l'application de contrôle ou les applications de contrôle (CA1, CA1', CA2, CA3) n'étant pas implémentées dans le réseau de distribution d'énergie lui-même, mais dans l'infrastructure du réseau de communication public (KN) et donc du fournisseur de services de réseau de ce réseau.

2. Procédé selon la revendication 1, **caractérisé en ce que** de telles applications de contrôle (CA1, CA1', CA2, CA3), qui commandent respectivement une quantité déterminée de nœuds de réseau (N1, N2) sont exécutées respectivement sur un ordinateur du réseau de communication public (KN) qui présente une distance spatiale par rapport à la quantité prédéterminée de nœuds de réseau (N1, N2) en dessous d'un seuil prédéterminé.

3. Procédé selon l'une des revendications précédentes, **caractérisé en ce que** le réseau de communication public (KN) comprend un réseau d'accès avec une pluralité de stations d'accès (BS) et un réseau central (CN) qui y est relié, les nœuds de réseau (N1, N2) ayant accès au réseau de communication public (KN) via au moins une partie des stations d'accès (BS).

4. Procédé selon la revendication 3, **caractérisé en ce qu'**une ou plusieurs des applications de contrôle (CA1, CA1', CA2, CA3) sont exécutées sur un ou plusieurs ordinateurs (SE) dans le réseau central (CN).

5. Procédé selon la revendication 3 ou 4, **caractérisé en ce qu'**une ou plusieurs des applications de contrôle (CA1, CA1', CA2, CA3) sont exécutées sur un ou plusieurs ordinateurs dans une ou plusieurs des stations d'accès (BS).

6. Procédé selon la revendication 5, **caractérisé en ce que** les applications de contrôle (CA1, CA1', CA2, CA3) exécutées sur les ordinateurs des stations d'accès (BS) communiquent entre elles via une interface, et plus particulièrement l'interface X2 d'un réseau radio mobile LTE.

7. Procédé selon l'une des revendications 3 à 6, **caractérisé en ce qu'**une ou plusieurs des applications de contrôle (CA1, CA1', CA2, CA3) sont exécutées dans un réseau dorsal qui est relié au réseau central (CN).

8. Procédé selon l'une des revendications précédentes, **caractérisé en ce qu'**est associé à un réseau basse tension respectif (LV) un nombre de premières applications de contrôle (CA1, CA1') qui commandent le réseau basse tension respectif (LV).

9. Procédé selon la revendication 8, **caractérisé en ce que**, pour au moins un réseau basse tension (LV), le nombre de premières applications de contrôle (CA1, CA1') comprend une seule première application de contrôle qui est préférentiellement exécutée sur un ordinateur dans le réseau central (CN) du réseau de communication public (KN).

10. Procédé selon la revendication 8 ou 9, **caractérisé en ce que**, pour au moins un réseau basse tension (LV), le nombre de premières applications de contrôle (CA1, CA1') inclut plusieurs premières applications de contrôle (CA1, CA1') qui sont préférentiellement exécutées sur des ordinateurs non seulement dans le réseau central (CN), mais aussi dans une ou plusieurs stations d'accès (BS).

11. Procédé selon l'une des revendications précédentes, **caractérisé en ce que** sont exécutées une ou plusieurs deuxièmes applications de contrôle (CA2) via lesquelles plusieurs deuxièmes nœuds de réseau (N2) communiquent entre eux.

12. Procédé selon l'une des revendications précédentes, **caractérisé en ce qu'**est exécutée au moins une troisième application de contrôle (CA3) qui surveille centralement le fonctionnement du réseau de distribution d'énergie et est exécutée préférentiellement sur un ordinateur dans le réseau dorsal.

13. Système de commande pour commande assistée par ordinateur d'un réseau de distribution d'énergie électrique composé d'une pluralité de nœuds de réseau (N1, N2), le réseau de distribution d'énergie comprenant un ou plusieurs réseaux basse tension (LV) qui contiennent respectivement des premiers nœuds de réseau (N1) pour injecter une puissance électrique dans le réseau basse tension respectif (LV) et/ou pour prélever une puissance électrique sur le réseau basse tension respectif (LV), le ou les réseaux basse tension (LV) étant reliés à au moins un réseau moyenne tension via un ou plusieurs deuxièmes nœuds de réseau (N2) sous la forme de stations de réseau local (ONS1, ONS2, ONS3), **caractérisé en ce que**
le système de commande comprend une ou plusieurs applications de contrôle (CA1, CA1', CA2, CA3) qui communiquent avec les nœuds de réseau (N1, N2) lors de leur exécution pour la commande du réseau de distribution d'énergie,
- l'application de contrôle ou les applications de contrôle (CA1, CA1', CA2, CA3) étant, aux fins de leur exécution, déposées sur un ou plusieurs ordinateurs dans un réseau de communication public (KN) auquel les nœuds de réseau (N1, N2) ont accès, le réseau de communication public (KN) comprenant un réseau radio mobile et/ou un réseau DSL et/ou un réseau de câbles,
- au moins une partie des applications de contrôle (CA1, CA1', CA2, CA3) étant exécutée sur une ou plusieurs machines virtuelles et
- l'application de contrôle ou les applications de contrôle (CA1, CA1', CA2, CA3) n'étant pas implémentées dans le réseau de distribution d'énergie lui-même, mais dans l'infrastructure du réseau de communication public (KN) et donc du fournisseur de services de réseau de ce réseau.

14. Système de commande selon la revendication 13, lequel est configuré pour exécuter un procédé selon l'une des revendications 1 à 12.
